# EUROPEAN PATENT APPLICATION

(11) **EP 4 319 228 A1**
(43) Date of publication of application: **07.02.2024**
(21) Application number: 22778748.8
(22) Date of filing: 24.03.2022
(51) Int. Cl.: H04W 8/30

(54) **METHOD AND APPARATUS FOR PROCESSING BEAM FAILURE OF INACTIVE SECONDARY NODE (SN)**

(30) Priority: 02.04.2021 CN 202110363920
(71) Applicant: Datang Mobile Communications Equipment Co., Ltd., Beijing 100085 (CN)
(72) Inventor: XU, Meng, Beijing 100085 (CN); LIANG, Jing, Beijing 100085 (CN)
(74) Representative: Studio Torta S.p.A.
(86) International application number: PCT/CN2022/082845
(87) International publication number: WO 2022/206565

(57) **Abstract**

Disclosed are a method and apparatus for processing a beam failure of an inactive secondary node (SN). The processing method comprises: when a configured secondary cell group (SCG) and/or a primary SCG cell (PSCell) is in an inactive state, reporting a beam failure message to a report node when a beam failure of the SCG is detected, wherein the report node is a master node (MN) or another active SN, and the SCG is an inactive SCG and/or an SCG to which the inactive PSCell belongs, and a node corresponding to the SCG is an inactive SN; and receiving a response message fed back by the report node, and performing processing according to the response message.

## Description

### CROSS REFERENCE TO RELATED APPLICATIONS

This application is based on and claims priority to Chinese patent application No. 202110363920.X, filed on April 2, 2021, the entire contents of which are incorporated herein by reference.

### TECHNICAL FIELD

The disclosure relates to a field of wireless communication technology, in particular to a method for processing beam failure of a deactivated SN and an apparatus for a processing beam failure of a deactivated SN.

### BACKGROUND

In high-frequency communication, in order to cope with infrequent big data streams, a secondary cell group (SCG) will enter a deactivated state when there is no larger data packet to be transmitted. A user equipment (UE) and a network side save a context of the SCG, and suspend some activities simultaneously, to reduce a power consumption of the UE.

However, the related art lacks a means of beam failure recovery (BFR) when the SCG is in the deactivated state and beam failure has occurred.

### SUMMARY

The disclosure provides a method for processing beam failure of a deactivated SN, an apparatus for processing beam failure of a deactivated SN, a device and a storage medium.

According to a first aspect of the disclosure, a method for processing beam failure of a deactivated SN, applied to a UE, is provided. The method includes:
in response to a configured secondary cell group (SCG) and/or a primary SCG cell (PSCell) being in a deactivated state, detecting whether beam failure occurs to a specific SCG, in which the specific SCG is the deactivated SCG and/or an SCG to which the deactivated PSCell belongs; and
in response to detecting that the beam failure occurs to the specific SCG, sending a message indicating beam failure of the specific SCG to the specific SCG via a master node (MN) or another SN in an activated state.

In some embodiments, detecting that the beam failure occurs to the specific SCG, includes:
detecting that the beam failure occurs to a PSCell of the specific SCG; and/or,
detecting that the beam failure occurs to a secondary cell (SCell) of the specific SCG.

In some embodiments, the message indicating beam failure includes at least one or more of:
indication information for indicating the beam failure of the specific SCG;
identification information of the specific SCG;
identification information of the SCell of the specific SCG to which the beam failure occurs;
identification information of the PSCell of the specific SCG;
a beam measurement result of the SCell or PSCell of the specific SCG to which the beam failure occurs; or
indication information of a beam identification (ID) of the SCell or PSCell of the specific SCG to which the beam failure occurs.

In some embodiments, sending the message indicating beam failure of the specific SCG to the specific SCG via the MN or another SN in the activated state, includes:
sending the message indicating beam failure of the specific SCG to the MN or another SN in the activated state by carrying the message indicating beam failure of the specific SCG in a radio resource control (RRC) signaling/media access control control element (MAC CE)/MAC protocol data unit (PDU), and sending by the MN or another SN in the activated state the message indicating beam failure of the specific SCG to the specific SCG.

In some embodiments, sending the message indicating beam failure of the specific SCG to the MN by carrying the message indicating beam failure of the specific SCG n the RRC signaling/MAC CE/MAC PDU, includes:
generating the RRC signaling/MAC CE that carries the message indicating beam failure of the specific SCG based on an encoding mode of the MN and sending the RRC signaling/MAC CE to the MN; or,
generating the RRC signaling/MAC CE/MAC PDU that carries the message indicating beam failure of the specific SCG based on an encoding mode of the deactivated SN and sending the RRC signaling/MAC CE/MAC PDU to the MN, wherein the deactivated SN is an SN corresponding to the specific SCG.

In some embodiments, generating the RRC signaling/MAC CE/MAC PDU that carries the message indicating beam failure of the specific SCG based on the encoding mode of the deactivated SN and sending the RRC signaling/MAC CE/MAC PDU to the MN, includes:
generating the RRC signaling that carries the message indicating beam failure of the specific SCG based on the encoding mode of the deactivated SN, and sending the RRC signaling that carries the message indicating beam failure of the specific SCG to the MN via a RRC signaling/MAC PDU of the MN; or,
generating the MAC CE/MAC PDU that carries the message indicating beam failure of the specific SCG based on the encoding mode of the deactivated SN, and sending the MAC CE/MAC PDU that carries the message indicating beam failure of the specific SCG to the MN via a MAC CE/MAC PDU of the MN.

In some embodiments, the RRC signaling/MAC CE/MAC PDU that carries the message indicating beam failure of the specific SCG further includes identification information of the deactivated SN and/or an encoded signaling length of the deactivated SN.

In some embodiments, the method further includes:
receiving a response message fed back by the MN or another SN in the activated state, in which the response message includes at least one of the followings:
beam recovery indication information;
indication information of rejecting beam recovery;
indication information for reconfiguring the deactivated SN;
a feedback message of the deactivated SN; or
configuration information for beam recovery.

In some embodiments, receiving the response message fed back by the MN or another SN in the activated state, includes at least one of the followings:
receiving the response message via a RRC signaling; or
receiving the response message via a MAC PDU/MAC CE.

In some embodiments, the RRC signaling/MAC CE/MAC PDU includes the feedback message of the deactivated SN or a RRC signaling/MAC CE/MAC PDU generated by the deactivated SN.

In some embodiments, the configuration information for beam recovery includes one or more of:
activated transmission configuration indication (TCI) information;
a synchronization signal block (SSB) index;
a channel state indication reference signal (CSI-RS) index;
beam identification information;
SCG identification information;
cell identification information;
the beam recovery indication information; or
the indication information of rejecting beam recovery.

In some embodiments, the method further includes:
recovering a corresponding beam based on the configuration information for beam recovery in the response message; or
recovering a beam with the best channel quality reported for the SCell or PSCell to which the beam failure occurs based on the response message; or
reporting a failure message for the specific SCG to the MN or another SN in the activated state, based on the indication information of rejecting beam recovery or the indication information for reconfiguring the deactivated SN in the response message.

In some embodiments, the method further includes:
in response to not receiving a response message fed back by the MN or another SN in the activated state within a preset time period, reporting a failure message for the specific SCG to the MN or another SN in the activated state.

In some embodiments, there is a communication interface between the another activated SN and the deactivated SN.

In some embodiments, the beam measurement result of the SCell or PSCell of the specific SCG to which the beam failure occurs includes one or more of the followings:
a beam measurement result greater than a preset threshold;
a maximum beam measurement result; or
measurement results of all beams.

In some embodiments, the indication information of the beam ID of the SCell or PSCell of the specific SCG to which the beam failure occurs includes one or more of the followings:
indication information of a beam whose measurement result is greater than a preset threshold; or
indication information of a beam corresponding to a maximum beam measurement result.

According to a second aspect of the disclosure, a method for processing beam failure of a deactivated SN, applied to a reporting node, is provided. The method includes:
receiving a message indicating beam failure from a UE;
sending the message indicating beam failure to a deactivated SN, in which the deactivated SN is an SN corresponding to a specific SCG, and the specific SCG is a deactivated SCG and/or an SCG to which a deactivated PSCell belongs;
receiving a feedback message from the deactivated SN; and
generating a response message based on the feedback message and sending the response message to the UE.

In some embodiments, receiving the feedback message from the deactivated SN, and the feedback message includes at least one of the followings:
indication information of confirming beam recovery;
indication information of rejecting beam recovery; or
configuration information for beam recovery.

In some embodiments, generating the response message based on the feedback message, includes:
carrying the feedback message in a RRC signaling/MAC CE/MAC PDU and sending the RRC signaling/MAC CE/MAC PDU to the UE.

In some embodiments, generating the response message based on the feedback message, includes:
generating the RRC signaling that carries the feedback message and sending the RRC signaling that carries the feedback message to the UE via a RRC signaling/MAC PDU of the MN; or,
generating the MAC CE/MAC PDU that carries the feedback message and sending the MAC CE/MAC PDU that carries the feedback message to the UE via a MAC CE/MAC PDU of the MN.

In some embodiments, the configuration information for beam recovery includes at least one of the followings:
activated TCI information;
an SSB index;
a CSI-RS index;
beam identification information;
SCG identification information;
cell identification information;
beam recovery indication information; or
the indication information of rejecting beam recovery.

According to a third aspect of the disclosure, a method for processing beam failure of a deactivated SN, applied to a deactivated network side device, is provided. The method includes:
receiving a message indicating beam failure from a reporting node, in which the reporting node is an MN or another activated SN;
generating a feedback message; and
sending the feedback message to the reporting node.

In some embodiments, the feedback message includes one or more of the followings:
indication information of confirming beam recovery;
indication information of rejecting beam recovery; or
configuration information for beam recovery.

In some embodiments, the configuration information for beam recovery includes one or more of the followings:
activated TCI information;
an SSB index;
a CSI-RS index;
beam identification information;
SCG identification information;
cell identification information;
beam recovery indication information; or
the indication information of rejecting beam recovery.

According to a fourth aspect of the disclosure, a device for processing beam failure of a deactivated SN, including a memory, a transceiver and a processor, is provided.

The memory is configured to store computer programs, the transceiver is configured to send and receive data under control of the processor, and the processor is configured to read the computer programs in the memory and perform the following operations:
in response to a configured SCG and/or PSCell being in a deactivated state, detecting whether beam failure occurs to a specific SCG, in which the specific SCG is the deactivated SCG and/or an SCG to which the deactivated PSCell belongs; and
in response to detecting that the beam failure occurs to the specific SCG, sending a message indicating beam failure of the specific SCG to the specific SCG via a master node (MN) or another SN in an activated state.

In some embodiments, detecting that the beam failure occurs to the specific SCG, includes:
detecting that the beam failure occurs to a PSCell of the specific SCG; and/or,
detecting that the beam failure occurs to a secondary cell (SCell) of the specific SCG.

In some embodiments, the message indicating beam failure includes at least one or more of:
indication information for indicating the beam failure of the specific SCG;
identification information of the specific SCG;
identification information of the SCell of the specific SCG to which the beam failure occurs;
identification information of the PSCell of the specific SCG;
a beam measurement result of the SCell or PSCell of the specific SCG to which the beam failure occurs; or
indication information of a beam identification (ID) of the SCell or PSCell of the specific SCG to which the beam failure occurs.

In some embodiments, sending the message indicating beam failure of the specific SCG to the specific SCG via the MN or another SN in the activated state, includes:
sending the message indicating beam failure of the specific SCG to the MN or another SN in the activated state by carrying the message indicating beam failure of the specific SCG in a radio resource control (RRC) signaling/media access control control element (MAC CE)/MAC protocol data unit (PDU), and sending by the MN or another SN in the activated state the message indicating beam failure of the specific SCG to the specific SCG.

In some embodiments, sending the message indicating beam failure of the specific SCG to the MN by carrying the message indicating beam failure of the specific SCG in the RRC signaling/MAC CE/MAC PDU, includes:
generating the RRC signaling/MAC CE that carries the message indicating beam failure of the specific SCG based on an encoding mode of the MN and sending the RRC signaling/MAC CE to the MN; or,
generating the RRC signaling/MAC CE/MAC PDU that carries the message indicating beam failure of the specific SCG based on an encoding mode of the deactivated SN and sending the RRC signaling/MAC CE/MAC PDU to the MN, wherein the deactivated SN is an SN corresponding to the specific SCG.

In some embodiments, generating the RRC signaling/MAC CE/MAC PDU that carries the message indicating beam failure of the specific SCG based on the encoding mode of the deactivated SN and sending the RRC signaling/MAC CE/MAC PDU to the MN, includes:
generating the RRC signaling that carries the message indicating beam failure of the specific SCG based on the encoding mode of the deactivated SN, and sending the RRC signaling that carries the message indicating beam failure of the specific SCG to the MN via a RRC signaling/MAC PDU of the MN; or,
generating the MAC CE/MAC PDU that carries the message indicating beam failure of the specific SCG based on the encoding mode of the deactivated SN, and sending the MAC CE/MAC PDU that carries the message indicating beam failure of the specific SCG to the MN via a MAC CE/MAC PDU of the MN.

In some embodiments, the RRC signaling/MAC CE/MAC PDU that carries the message indicating beam failure of the specific SCG further includes identification information of the deactivated SN and/or an encoded signaling length of the deactivated SN.

In some embodiments, the method further includes:
receiving a response message fed back by the MN or another SN in the activated state, in which the response message includes at least one of the followings:
beam recovery indication information;
indication information of rejecting beam recovery;
indication information for reconfiguring the deactivated SN;
a feedback message of the deactivated SN; or
configuration information for beam recovery.

In some embodiments, receiving the response message fed back by the MN or another SN in the activated state, includes at least one of the followings:
receiving the response message via a RRC signaling; or
receiving the response message via a MAC PDU/MAC CE.

In some embodiments, the RRC signaling/MAC CE/MAC PDU includes the feedback message of the deactivated SN or a RRC signaling/MAC CE/MAC PDU generated by the deactivated SN.

In some embodiments, the configuration information for beam recovery includes one or more of:
activated TCI information;
an SSB index;
a CSI-RS index;
beam identification information;
SCG identification information;
cell identification information;
the beam recovery indication information; or
the indication information of rejecting beam recovery .

In some embodiments, the method further includes:
recovering a corresponding beam based on the configuration information for beam recovery in the response message; or
recovering a beam with the best channel quality reported for the SCell or PSCell to which the beam failure occurs based on the response message; or
reporting a failure message for the specific SCG to the MN or another SN in the activated state, based on the indication information of rejecting beam recovery or the indication information for reconfiguring the deactivated SN in the response message.

In some embodiments, the method further includes:
in response to not receiving a response message fed back by the MN or another SN in the activated state within a preset time period, reporting a failure message for the specific SCG to the MN or another SN in the activated state.

In some embodiments, there is a communication interface between the another activated SN and the deactivated SN.

In some embodiments, the beam measurement result of the SCell or PSCell of the specific SCG to which the beam failure occurs includes one or more of the followings:
a beam measurement result greater than a preset threshold;
a maximum beam measurement result; or
measurement results of all beams.

In some embodiments, the indication information of the beam ID of the SCell or PSCell of the specific SCG to which the beam failure occurs includes one or more of the followings:
indication information of a beam whose measurement result is greater than a preset threshold; and
indication information of a beam corresponding to a maximum beam measurement result.

According to a fifth aspect of the disclosure, a device for processing beam failure of a deactivated SN, including: a memory, a transceiver and a processor, is provided.

The memory is configured to store computer programs, the transceiver is configured to send and receive data under control of the processor, and the processor is configured to read the computer programs in the memory and perform the following operations:
receiving a message indicating beam failure from a UE;
sending the message indicating beam failure to the deactivated SN, in which the deactivated SN is an SN corresponding to a specific SCG, and the specific SCG is a deactivated SCG and/or an SCG to which a deactivated PSCell belongs;
receiving a feedback message from the deactivated SN; and
generating a response message based on the feedback message and sending the response message to the UE.

In some embodiments, receiving the feedback message from the deactivated SN, and the feedback message includes at least one of the followings:
indication information of confirming beam recovery;
indication information of rejecting beam recovery; or
configuration information for beam recovery.

In some embodiments, generating the response message based on the feedback message, includes:
carrying the feedback message in a RRC signaling/MAC CE/MAC PDU and sending the RRC signaling/MAC CE/MAC PDU to the UE.

In some embodiments, generating the response message based on the feedback message, includes:
generating the RRC signaling that carries the feedback message and sending the RRC signaling that carries the feedback message to the UE via a RRC signaling/MAC PDU of the MN; or,
generating the MAC CE/MAC PDU that carries the feedback message and sending the MAC CE/MAC PDU that carries the feedback message to the UE via a MAC CE/MAC PDU of the MN.

In some embodiments, the configuration information for beam recovery includes at least one of the followings:
activated TCI information;
an SSB index;
a CSI-RS index;
beam identification information;
SCG identification information;
cell identification information;
beam recovery indication information; or
the indication information of rejecting beam recovery.

According to a sixth aspect of the disclosure, a device for processing beam failure of a deactivated SN, including: a memory, a transceiver and a processor, is provided.

The memory is configured to store computer programs, the transceiver is configured to send and receive data under control of the processor, and the processor is configured to read the computer programs in the memory and perform the following operations:
receiving a message indicating beam failure from a reporting node, in which the reporting node is an MN or another activated SN;
generating a feedback message; and
sending the feedback message to the reporting node.

In some embodiments, the feedback message includes one or more of the followings:
indication information of confirming beam recovery;
indication information of rejecting beam recovery; or
configuration information for beam recovery.

In some embodiments, the configuration information for beam recovery includes one or more of the followings:
activated TCI information;
an SSB index;
a CSI-RS index;
beam identification information;
SCG identification information;
cell identification information;
beam recovery indication information; or
the indication information of rejecting beam recovery.

According to a seventh aspect of the disclosure, an apparatus for processing beam failure of a deactivated SN is provided. The apparatus includes:
a reporting unit, configured to, in response to a configured SCG and/or PSCell being in a deactivated state, detect whether beam failure occurs to a specific SCG, in which the specific SCG is the deactivated SCG and/or an SCG to which the deactivated PSCell belongs; and
a responding unit, configured to, in response to detecting that the beam failure occurs to the specific SCG, send a message indicating beam failure of the specific SCG to the specific SCG via a master node (MN) or another SN in an activated state.

According to an eighth aspect of the disclosure, an apparatus for processing beam failure of a deactivated SN is provided. The apparatus includes:
a first receiving unit, configured to receive a message indicating beam failure from a UE;
a reporting unit, configured to send the message indicating beam failure to the deactivated SN, in which the deactivated SN is an SN corresponding to a specific SCG, and the specific SCG is a deactivated SCG and/or an SCG to which a deactivated PSCell belongs;
a second receiving unit, configured to receive a feedback message from the deactivated SN; and
a responding unit, configured to generate a response message based on the feedback message and send the response message to the UE.

According to a ninth aspect of the disclosure, an apparatus for processing beam failure of a deactivated SN is provided. The apparatus includes:
a receiving unit, configured to receive a message indicating beam failure from a reporting node, in which the reporting node is an MN or another activated SN;
a feedback unit, configured to generate a feedback message; and
a sending unit, configured to send the feedback message to the reporting node.

According to a tenth aspect of the disclosure, a processor-readable storage medium having computer programs stored thereon is provided. The computer programs are configured to cause a processor to implement the method of the first aspect.

According to a seventh aspect of the disclosure, a processor-readable storage medium having computer programs stored thereon is provided. The computer programs are configured to cause a processor to implement the method of the second aspect.

According to a twelfth aspect of the disclosure, a processor-readable storage medium having computer programs stored thereon is provided. The computer programs are configured to cause a processor to implement the method of the third aspect.

According to a thirteenth aspect of the disclosure, a computer program product including computer program codes, is provided. When the computer program codes are executed on a computer, the computer is caused to implement the method of the first aspect.

According to a fourteenth aspect of the disclosure, a computer program product including computer program codes, is provided. When the computer program codes are executed on a computer, the computer is caused to implement the method of the second aspect.

According to a fifteenth aspect of the disclosure, a computer program product including computer program codes, is provided. When the computer program codes are executed on a computer, the computer is caused to implement the method of the third aspect.

According to a sixteenth aspect of the disclosure, a computer program including computer program codes, is provided. When the computer program codes are executed on a computer, the computer is caused to implement the method of the first aspect.

According to a seventeenth aspect of the disclosure, a computer program including computer program codes, is provided. When the computer program codes are executed on a computer, the computer is caused to implement the method of the second aspect.

According to an eighteenth aspect of the disclosure, a computer program including computer program codes, is provided. When the computer program codes are executed on a computer, the computer is caused to implement the method of the third aspect.

According to the technical solution of the disclosure, when the SCG is in the deactivated state, the message indicating beam failure of the specific SCG can be reported to the deactivated SN by the reporting node, and the reporting node is enabled to generate the response message based on the feedback message generated by the deactivated SN, so that the UE can determine, based on the response message, a method for processing beam failure, thereby realizing BFR when the SCG is in the deactivated state and improving a robustness of a communication system.

It should be understood that the content described in this section is not intended to identify key or important features of the embodiments of the disclosure, nor is it intended to limit the scope of the disclosure. Additional features of the disclosure will be easily understood from the following description.

### BRIEF DESCRIPTION OF THE DRAWINGS

The accompanying drawings are used to better understand this solution and do not constitute a limitation to the disclosure, in which:
FIG. 1 is a flowchart of a method for processing beam failure of a deactivated SN provided according to an embodiment of the disclosure.
FIG. 2 is a flowchart of a method for processing beam failure of a deactivated SN provided according to another embodiment of the disclosure.
FIG. 3 is a flowchart of a method for processing beam failure of a deactivated SN provided according to another embodiment of the disclosure.
FIG. 4 is a block diagram of a device for processing beam failure of a deactivated SN provided according to another embodiment of the disclosure.
FIG. 5 is a block diagram of a device for processing beam failure of a deactivated SN provided according to another embodiment of the disclosure.
FIG. 6 is a block diagram of a device for processing beam failure of a deactivated SN provided according to an embodiment of the disclosure.
FIG. 7 is a block diagram of an apparatus for processing beam failure of a deactivated SN provided according to an embodiment of the disclosure.
FIG. 8 is a block diagram of an apparatus for processing beam failure of a deactivated SN provided according to an embodiment of the disclosure.
FIG. 9 is a block diagram of an apparatus for processing beam failure of a deactivated SN provided according to an embodiment of the disclosure.

### DETAILED DESCRIPTION

The following description of exemplary embodiments of the disclosure is provided in combination with the accompanying drawings, which includes various details of the embodiments of the disclosure to aid in understanding, and should be considered merely exemplary. Those skilled in the art understood that various changes and modifications of the embodiments described herein can be made without departing from the scope and spirit of the disclosure. For the sake of clarity and brevity, descriptions of well-known functions and structures are omitted from the following description.

A method for processing beam failure of a deactivated SN, an apparatus for processing beam failure of a deactivated SN, a terminal, a network side device and a storage medium of the embodiments of the disclosure are described below with reference to the accompanying drawings.

In order to reduce power consumption of the UE for infrequent big data streams, a deactivated secondary cell group (SCG) is introduced in the 5G new radio (NR) release 17 (R17) standard. The deactivated SCG is equivalent to that the SCG is in the dormant state, or the SCG is suspended, or the primary SCG cell (PSCell) is suspended, or the PSCell is in the dormant state, or the PSCell is deactivated. When there is no large data packet to be transmitted, the SCG enters into the deactivated state, and the UE and the network side save the context of the SCG and suspend some behaviors, for example, stopping listening to a physical downlink control channel (PDCCH) on the SCG side, to reduce the power consumption of the UE. When there is a large data stream to be interacted, the SCG of the UE is quickly activated for data transmission.

In order to quickly activate the SCG for data transmission, it is possible that the UE still performs beam failure detection (BFD) on the SCG side when the SCG is in the deactivated state, and the behavior of the UE is not yet defined when the UE detects that beam failure occurs on the SCG side.

Accordingly, the method for processing beam failure of a deactivated SN provided by the embodiment of the disclosure includes: in response to an SCG and/or a PSCell entering a deactivated state, reporting a message indicating beam failure of the specific SCG to a reporting node upon detecting that beam failure occurs to the deactivated SCG, in which the reporting node is a master node (MN) or another activated SN, the SCG is the deactivated SCG and/or an SCG to which the deactivated PSCell belongs, and the corresponding node of the SCG is a deactivated SN; receiving a response message fed back by the reporting node, and performing processes based on the response message. Therefore, beam failure recovery (BFR) when the SCG is in the deactivated state is realized.

For ease of understanding, the terms involved in this disclosure are introduced.

### 1. SCG

To improve a data transmission rate, the network can configure the SCG for the UE to share load, so as to improve the data transmission rate of the UE. After the network configures the SCG for the UE, the UE accesses the SN in a special cell (SpCell) of the SCG, i.e., PSCell. The network can configure bearer transport for the UE in the SCG. The UE maintains configuration information of both the MCG and the SCG simultaneously.

The NR R17 project is expected to support the deactivated SCG. The deactivated SCG is equivalent to that the SCG is suspended, or the SCG is in the dormant state, or the primary SCG cell (PSCell) is deactivated, or the PSCell is suspended, or the PSCell is in the dormant state, which is aimed for infrequent big data streams. When there is no large data packet to be transmitted, the SCG enters into the deactivated state, and the UE and the network side save the context of the SCG and suspend some behaviors, for example, stopping listening to the PDCCH on the SCG side, not listening to the SCG channel, stopping data transmission on the SCG side, and stopping random access etc., to achieve the purpose of saving the power consumption of the UE. When there is a large data stream to be interacted, the SCG of the UE is quickly activated for data transmission. The UE may continue to maintain behaviors such as the BFD when the SCG is in the deactivated state.

The existing protocol supports the UE to connect to two nodes simultaneously, i.e., an MN and an SN, but a multi-connection architecture is also expected to be supported in the future, that is, the UE connects to two or more nodes simultaneously, e.g., an MN and multiple SNs, and the nodes are identified by different identification information, e.g., Cell group ID.

### 2. BFR

The 5G NR system supports multi-beam, and the UE needs to select a suitable beam to access the network side through measurement. The UE in a connected state will perform beam failure detection (BFD) on a serving cell. When the UE detects that beam failure occurs to the SpCell, the UE may trigger a random access procedure to realize the BFR. In the case where the UE detects that beam failure occurs to the SCell, it triggers the BFR by reporting to the media access control control element (MAC CE) via a corresponding MAC entity. That is, the MAC CE carries indication information of the SCell to which beam failure occurs and may also carry indication information of a suitable measurement signal, so that the network side may learn about a suitable beam based on the indication information and recover the beam that connects the SCell to the UE.

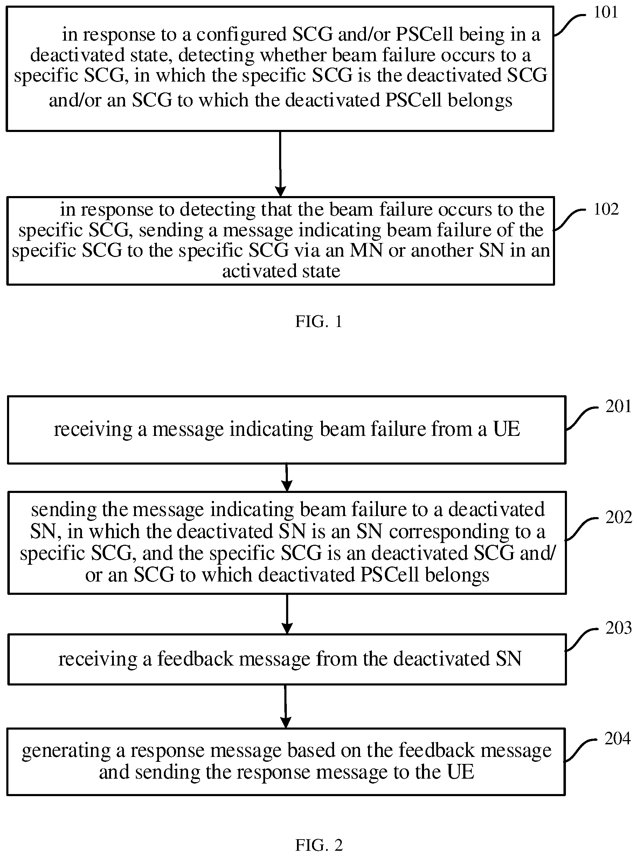

FIG. 1 is a flowchart of a method for processing beam failure of a deactivated SN provided according to an embodiment of the disclosure. The method provided by the embodiment of the disclosure may be applicable to various systems, in particular to 5G system. Examples of the applicable systems include a global system of mobile communication (GSM) system, a code division multiple access (CDMA) system, a wideband code division multiple access (WCDMA) general packet radio service (GPRS) system, a long term evolution (LTE) system, an LTE frequency division duplex (FDD) system, an LTE time division duplex (TDD) system, a long term evolution advanced (LTE-A) system, a universal mobile telecommunication system (UMTS), a worldwide interoperability for microwave access (WiMAX) system, and a 5G NR system. Each system includes terminal devices and network devices. The system may also include a core network portion, such as an Evolved Packet System (EPS), a 5G System (5GS), and so on.

As illustrated in FIG. 1, the method for processing beam failure of a deactivated SN is applied to a UE. The method includes the following steps.

At step 101, in response to a configured SCG and/or PSCell being in a deactivated state, it is detected whether beam failure occurs to a specific SCG, in which the specific SCG is the deactivated SCG and/or an SCG to which the deactivated PSCell belongs.

At step 102, in response to detecting that the beam failure occurs to the specific SCG, a message indicating beam failure of the specific SCG is sent to the specific SCG via an MN or another SN in an activated state.

In some embodiments, detecting that the beam failure occurs to the specific SCG, includes:
detecting that the beam failure occurs to a PSCell of the specific SCG; and/or,
detecting that the beam failure occurs to a secondary cell (SCell)of the specific SCG.

In some embodiments, the message indicating beam failure includes at least one or more of:
indication information for indicating the beam failure of the specific SCG;
identification information of the specific SCG;
identification information of the SCell of the specific SCG to which the beam failure occurs;
identification information of the PSCell of the specific SCG;
a beam measurement result of the SCell or PSCell of the specific SCG to which the beam failure occurs; or
indication information of a beam identification (ID) of the SCell or PSCell of the specific SCG to which the beam failure occurs.

In some embodiments, sending the message indicating beam failure of the specific SCG to the specific SCG via the MN or another SN in the activated state, includes:
sending the message indicating beam failure of the specific SCG to the MN or another SN in the activated state by carrying the message indicating beam failure of the specific SCG in a radio resource control (RRC) signaling/media access control control element (MAC CE)/MAC protocol data unit (PDU), and sending by the MN or another SN in the activated state the message indicating beam failure of the specific SCG to the specific SCG.

In some embodiments, sending the message indicating beam failure of the specific SCG to the MN by carrying the message indicating beam failure of the specific SCG in the RRC signaling/MAC CE/MAC PDU, includes:
generating the RRC signaling/MAC CE that carries the message indicating beam failure of the specific SCG based on an encoding mode of the MN and sending the RRC signaling/MAC CE to the MN; or,
generating the RRC signaling/MAC CE/MAC PDU that carries the message indicating beam failure of the specific SCG based on an encoding mode of the deactivated SN and sending the RRC signaling/MAC CE/MAC PDU to the MN, wherein the deactivated SN is an SN corresponding to the specific SCG.

In some embodiments, generating the RRC signaling/MAC CE/MAC PDU that carries the message indicating beam failure of the specific SCG based on the encoding mode of the deactivated SN and sending the RRC signaling/MAC CE/MAC PDU to the MN, includes:
generating the RRC signaling that carries the message indicating beam failure of the specific SCG based on the encoding mode of the deactivated SN, and sending the RRC signaling that carries the message indicating beam failure of the specific SCG to the MN via a RRC signaling/MAC PDU of the MN; or,
generating the MAC CE/MAC PDU that carries the message indicating beam failure of the specific SCG based on the encoding mode of the deactivated SN, and sending the MAC CE/MAC PDU that carries the message indicating beam failure of the specific SCG to the MN via a MAC CE/MAC PDU of the MN.

In some embodiments, sending the message indicating beam failure of the specific SCG to the another SN in the deactivated state by carrying the message indicating beam failure of the specific SCG in the RRC signaling/MAC CE/MAC PDU, includes:
generating the RRC signaling/MAC CE that carries the message indicating beam failure of the specific SCG based on an encoding mode of the MN and sending the RRC signaling/MAC CE to the another SN in the activated state; or,
generating the RRC signaling/MAC CE/MAC PDU that carries the message indicating beam failure of the specific SCG based on an encoding mode of the deactivated SN and sending the RRC signaling/MAC CE/MAC PDU to the another SN in the activated state, in which the deactivated SN is an SN corresponding to the specific SCG.

In some embodiments, generating the RRC signaling/MAC CE/MAC PDU that carries the message indicating beam failure of the specific SCG based on the encoding mode of the deactivated SN and sending the RRC signaling/MAC CE/MAC PDU to the another SN in the activated state, includes:
generating the RRC signaling that carries the message indicating beam failure of the specific SCG based on the encoding mode of the deactivated SN, and sending the RRC signaling that carries the message indicating beam failure of the specific SCG to the another SN in the activated state via a RRC signaling/MAC PDU of the MN; or,
generating the MAC CE/MAC PDU that carries the message indicating beam failure of the specific SCG based on the encoding mode of the deactivated SN, and sending the MAC CE/MAC PDU that carries the message indicating beam failure of the specific SCG to the another SN in the deactivated state via a MAC CE/MAC PDU of the MN.

In some embodiments, the RRC signaling/MAC CE/MAC PDU that carries the message indicating beam failure of the specific SCG further includes identification information of the deactivated SN and/or an encoded signaling length of the deactivated SN.

In some embodiments, the method further includes:
receiving a response message fed back by the MN or another SN in the activated state, in which the response message includes at least one of the followings:
beam recovery indication information;
indication information of rejecting beam recovery;
indication information for reconfiguring the deactivated SN;
a feedback message of the deactivated SN; or
configuration information for beam recovery.

In some embodiments, receiving the response message fed back by the MN or another SN in the activated state, includes at least one of the followings:
receiving the response message via a RRC signaling; or
receiving the response message via a MAC PDU/MAC CE.

In some embodiments, the RRC signaling/MAC CE/MAC PDU includes the feedback message of the deactivated SN or a RRC signaling/MAC CE/MAC PDU generated by the deactivated SN.

In some embodiments, the configuration information for beam recovery includes one or more of:
activated transmission configuration indication (TCI) information;
a synchronization signal block (SSB) index;
a channel state indication reference signal (CSI-RS) index;
beam identification information;
SCG identification information;
cell identification information;
the beam recovery indication information; or
the indication information of rejecting beam recovery .

In some embodiments, the method further includes:
recovering a corresponding beam based on the configuration information for beam recovery in the response message; or
recovering a beam with the best channel quality reported for the SCell or PSCell to which the beam failure occurs based on the response message; or
reporting a failure message for the specific SCG to the MN or another SN in the activated state, based on the indication information of rejecting beam recovery or the indication information for reconfiguring the deactivated SN in the response message.

In some embodiments, the method further includes:
in response to not receiving a response message fed back by the MN or another SN in the activated state within a preset time period, reporting a failure message for the specific SCG to the MN or another SN in the activated state.

In some embodiments, there is a communication interface between the another activated SN and the deactivated SN.

In some embodiments, the beam measurement result of the SCell or PSCell of the specific SCG to which the beam failure occurs includes one or more of the followings:
a beam measurement result greater than a preset threshold;
a maximum beam measurement result; or
measurement results of all beams.

In some embodiments, the indication information of the beam ID of the SCell or PSCell of the specific SCG to which the beam failure occurs includes one or more of the followings:
indication information of a beam whose measurement result is greater than a preset threshold; and
indication information of a beam corresponding to a maximum beam measurement result.

In the embodiments of the disclosure, when the SCG is in the deactivated state, the UE can report the message indicating beam failure to the deactivated SN via the reporting node, and the reporting node is enabled to generate the response message based on the feedback message generated by the deactivated SN, so that the UE can determine, based on the response message, a method for processing beam failure, thereby realizing the BFR when the SCG is in the deactivated state.

FIG. 2 is a flowchart of a method for processing beam failure of a deactivated SN provided according to an embodiment of the disclosure. The method is applied to a reporting node, and the reporting node is an MN or another activated SN.

As illustrated in FIG. 2, a method for processing beam failure of a deactivated SN in an embodiment of the disclosure, applied to a reporting node, is provided. The method includes the following steps.

At step 201, a message indicating beam failure is received from a UE.

At step 202, the message indicating beam failure is sent to the deactivated SN, in which the deactivated SN is an SN corresponding to a specific SCG, and the specific SCG is a deactivated SCG and/or an SCG to which a deactivated PSCell belongs.

At step 203, a feedback message is received from the deactivated SN.

At step 204, a response message is generated based on the feedback message and sent to the UE.

In some embodiments, receiving the feedback message from the deactivated SN, and the feedback message includes at least one of the followings:
indication information of confirming beam recovery;
indication information of rejecting beam recovery; or
configuration information for beam recovery.

In some embodiments, generating the response message based on the feedback message, includes:
carrying the feedback message in a RRC signaling/MAC CE/MAC PDU and sending the RRC signaling/MAC CE/MAC PDU to the UE.

In some embodiments, generating the response message based on the feedback message, includes:
generating the RRC signaling that carries the feedback message and sending the RRC signaling that carries the feedback message to the UE via a RRC signaling/MAC PDU of the MN; or,
generating the MAC CE/MAC PDU that carries the feedback message and sending the MAC CE/MAC PDU that carries the feedback message to the UE via a MAC CE/MAC PDU of the MN.

In some embodiments, the configuration information for beam recovery includes at least one of the followings:
activated TCI information;
an SSB index;
a CSI-RS index;
beam identification information;
SCG identification information;
cell identification information;
beam recovery indication information; or
the indication information of rejecting beam recovery.

In the embodiments of the disclosure, when the SCG is in the deactivated state, the UE can report the message indicating beam failure to the deactivated SN via the reporting node, and the reporting node is enabled to generate the response message based on the feedback message generated by the deactivated SN, so that the UE can determine, based on the response message, a method for processing beam failure, thereby realizing the BFR when the SCG is in the deactivated state.

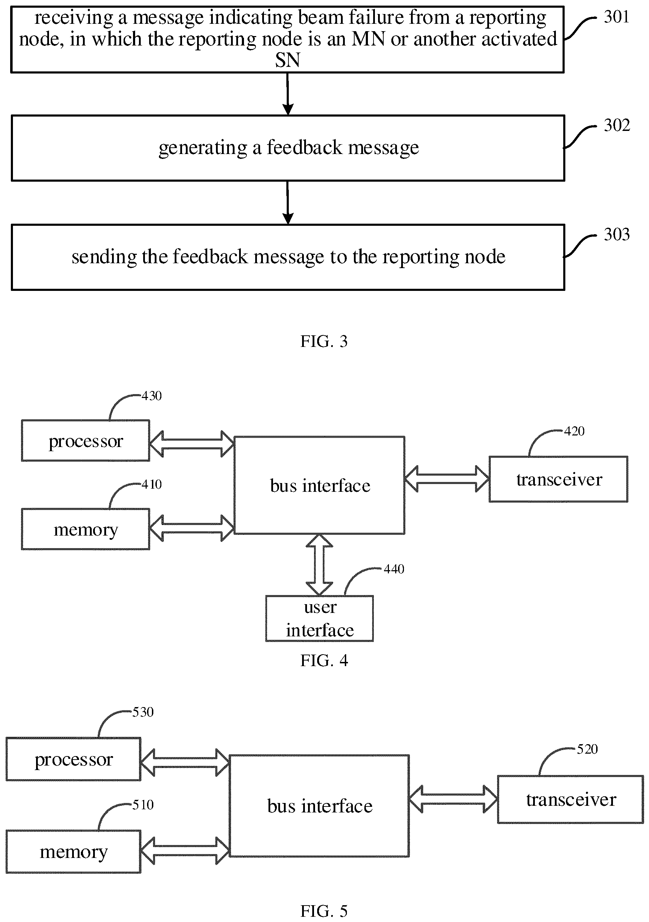

FIG. 3 is a flowchart of a method for processing beam failure of a deactivated SN provided according to an embodiment of the disclosure. The method is applied to a deactivated network side device. The deactivated network side device includes a deactivated SN.

As illustrated in FIG. 3, the method further includes the following steps.

At step 301, a message indicating beam failure is received from a reporting node, in which the reporting node is an MN or another activated SN.

At step 302, a feedback message is generated.

At step 303, the feedback message is sent to the reporting node.

In some embodiments, the feedback message includes one or more of the followings:
indication information of confirming beam recovery;
indication information of rejecting beam recovery; or
configuration information for beam recovery.

In some embodiments, the configuration information for beam recovery includes one or more of the followings:
activated TCI information;
an SSB index;
a CSI-RS index;
beam identification information;
SCG identification information;
cell identification information;
beam recovery indication information; or
the indication information of rejecting beam recovery.

In the embodiments of the disclosure, when the SCG is in the deactivated state, the UE can report the message indicating beam failure to the deactivated SN via the reporting node, and the reporting node is enabled to generate the response message based on the feedback message generated by the deactivated SN, so that the UE can determine, based on the response message, a method for processing beam failure, thereby realizing the BFR when the SCG is in the deactivated state.

In the embodiment of the disclosure, the disclosure also provides a device for processing beam failure of a deactivated SN, which may be a terminal device. FIG. 4 is a block diagram of a device for processing beam failure of a deactivated SN provided according to an embodiment of the disclosure. The terminal device involved in the embodiment of the disclosure may be a device that provides voice and/or data connectivity to a user, a handheld device with a wireless connectivity function, or other processing devices connected to a wireless modem. The name of the terminal device may also be different in different systems. For example, in a 5G system, the terminal device may be referred to as UE. The wireless terminal device may communicate with one or more core networks (CNs) via a radio access network (RAN). The wireless terminal device may be a mobile terminal device such as a cell phone (or "cellular" phone) and a computer having a mobile terminal device, a portable mobile device, a pocket-sized mobile device, a handheld mobile device, a computer-built mobile device or a vehicle-mounted mobile device that exchanges language and/or data with the RAN. Examples of the wireless terminal device include a personal communication service (PCS) phone, a cordless phone, a session initiated protocol (SIP) phone, a wireless local loop (WLL) station, a personal digital assistant (PDA), and the like. The wireless terminal device may also be referred to as a system, a subscriber unit, a subscriber station, a mobile station, a mobile, a remote station, an access point, a remote terminal, an access terminal, a user terminal, a user agent, or a user device, which is not limited in the embodiments of the disclosure.

As illustrated in FIG. 4, the device for processing beam failure of a deactivated SN includes: a memory 410, a transceiver 420, a processor 430 and a user interface 440.

The memory 410 is configured to store computer programs, the transceiver 420 is configured to send and receive data under control of the processor, the user interface 440 is configured for information interaction between a user and a system, and the processor 430 is configured to read the computer programs in the memory and perform the following operations:
in response to a configured SCG and/or PSCell being in a deactivated state, detecting whether beam failure occurs to a specific SCG, in which the specific SCG is the deactivated SCG and/or an SCG to which the deactivated PSCell belongs; and
in response to detecting that the beam failure occurs to the specific SCG, sending a message indicating beam failure of the specific SCG to the specific SCG via a master node (MN) or another SN in an activated state.

The transceiver 420 is configured to send and receive data under the control of the processor 430.

In FIG. 4, the bus architecture may include any number of interconnected buses and bridges, specifically one or more processors represented by the processor 430 and various circuits of the memory represented by the memory 410 are linked together. The bus architecture may also link peripheral devices, voltage regulators, and various other circuits such as power management circuits together, which are well known in the art and will not be further described herein. The bus interface provides an interface. The transceiver 420 may include a plurality of elements, i.e., including a transmitter and a receiver, and provides units for communicating with various other devices over transmission mediums, such as wireless channels, wired channels, fiber optic cables, etc. For different UEs, the user interface 440 may also be an interface capable of externally and internally connecting desired devices. The connected devices include, but are not limited to, a keypad, a display, a speaker, a microphone, a joystick, and the like.

The processor 430 is responsible for managing bus architecture and usual processing, and the memory 410 may store data used by the processor 430 in performing operations.

In some embodiments, the processor 430 may be a central processing unit (CPU), an application specific integrated circuit (ASIC), a field-programmable gate array (FPGA), or a complex programmable logic device (CPLD). The processor may also adopt a multi-core architecture.

The processor is configured to execute any of the methods provided by the embodiments of the disclosure by calling computer programs stored in the memory and executing obtained executable instructions. The processor and the memory may also be physically separated.

In some embodiments, detecting that the beam failure occurs to the specific SCG, includes:
detecting that the beam failure occurs to a PSCell of the specific SCG; and/or,
detecting that the beam failure occurs to a secondary cell (SCell) of the specific SCG.

In some embodiments, the message indicating beam failure includes at least one or more of:
indication information for indicating the beam failure of the specific SCG;
identification information of the specific SCG;
identification information of the SCell of the specific SCG to which the beam failure occurs;
identification information of the PSCell of the specific SCG;
a beam measurement result of the SCell or PSCell of the specific SCG to which the beam failure occurs; or
indication information of a beam identification (ID) of the SCell or PSCell of the specific SCG to which the beam failure occurs.

In some embodiments, sending the message indicating beam failure of the specific SCG to the specific SCG via the MN or another SN in the activated state, includes:
sending the message indicating beam failure of the specific SCG to the MN or another SN in the activated state by carrying the message indicating beam failure of the specific SCG in a radio resource control (RRC) signaling/media access control control element (MAC CE)/MAC protocol data unit (PDU), and sending by the MN or another SN in the activated state the message indicating beam failure of the specific SCG to the specific SCG.

In some embodiments, sending the message indicating beam failure of the specific SCG to the MN by carrying the message indicating beam failure of the specific SCG in the RRC signaling/MAC CE/MAC PDU, includes:
generating the RRC signaling/MAC CE that carries the message indicating beam failure of the specific SCG based on an encoding mode of the MN and sending the RRC signaling/MAC CE to the MN; or,
generating the RRC signaling/MAC CE/MAC PDU that carries the message indicating beam failure of the specific SCG based on an encoding mode of the deactivated SN and sending the RRC signaling/MAC CE/MAC PDU to the MN, wherein the deactivated SN is an SN corresponding to the specific SCG.

In some embodiments, generating the RRC signaling/MAC CE/MAC PDU that carries the message indicating beam failure of the specific SCG based on the encoding mode of the deactivated SN and sending the RRC signaling/MAC CE/MAC PDU to the MN, includes:
generating the RRC signaling that carries the message indicating beam failure of the specific SCG based on the encoding mode of the deactivated SN, and sending the RRC signaling that carries the message indicating beam failure of the specific SCG to the MN via a RRC signaling/MAC PDU of the MN; or,
generating the MAC CE/MAC PDU that carries the message indicating beam failure of the specific SCG based on the encoding mode of the deactivated SN, and sending the MAC CE/MAC PDU that carries the message indicating beam failure of the specific SCG to the MN via a MAC CE/MAC PDU of the MN.

In some embodiments, sending the message indicating beam failure of the specific SCG to the another SN in the activated state by carrying the message indicating beam failure of the specific SCG in the RRC signaling/MAC CE/MAC PDU, includes:
generating the RRC signaling/MAC CE that carries the message indicating beam failure of the specific SCG based on an encoding mode of the MN and sending the RRC signaling/MAC CE to the another SN in the activated state; or,
generating the RRC signaling/MAC CE/MAC PDU that carries the message indicating beam failure of the specific SCG based on an encoding mode of the deactivated SN and sending the RRC signaling/MAC CE/MAC PDU to the another SN in the activated state, in which the deactivated SN is an SN corresponding to the specific SCG.

In some embodiments, generating the RRC signaling/MAC CE/MAC PDU that carries the message indicating beam failure of the specific SCG based on the encoding mode of the deactivated SN and sending the RRC signaling/MAC CE/MAC PDU to the another SN in the activated state, includes:
generating the RRC signaling that carries the message indicating beam failure of the specific SCG based on the encoding mode of the deactivated SN, and sending the RRC signaling that carries the message indicating beam failure of the specific SCG to the another SN in the activated state via a RRC signaling/MAC PDU of the MN; or,
generating the MAC CE/MAC PDU that carries the message indicating beam failure of the specific SCG based on the encoding mode of the deactivated SN, and sending the MAC CE/MAC PDU that carries the message indicating beam failure of the specific SCG to the another SN in the activated state via a MAC CE/MAC PDU of the MN.

In some embodiments, the RRC signaling/MAC CE/MAC PDU that carries the message indicating beam failure of the specific SCG further includes identification information of the deactivated SN and/or an encoded signaling length of the deactivated SN.

In some embodiments, the method further includes:
receiving a response message fed back by the MN or another SN in the activated state, in which the response message includes at least one of the followings:
beam recovery indication information;
indication information of rejecting beam recovery;
indication information for reconfiguring the deactivated SN;
a feedback message of the deactivated SN; or
configuration information for beam recovery.

In some embodiments, receiving the response message fed back by the MN or another SN in the activated state, includes at least one of the followings:
receiving the response message via a RRC signaling; or
receiving the response message via a MAC PDU/MAC CE.

In some embodiments, the RRC signaling/MAC CE/MAC PDU includes the feedback message of the deactivated SN or a RRC signaling/MAC CE/MAC PDU generated by the deactivated SN.

In some embodiments, the configuration information for beam recovery includes one or more of:
activated TCI information;
an SSB index;
a CSI-RS index;
beam identification information;
SCG identification information;
cell identification information;
the beam recovery indication information; or
the indication information of rejecting beam recovery.

In some embodiments, the method further includes:
recovering a corresponding beam based on the configuration information for beam recovery in the response message; or
recovering a beam with the best channel quality reported for the SCell or PSCell to which the beam failure occurs based on the response message; or
reporting a failure message for the specific SCG to the MN or another SN in the deactivated state, based on the indication information of rejecting beam recovery or the indication information for reconfiguring the deactivated SN in the response message.

In some embodiments, the method further includes:
in response to not receiving a response message fed back by the MN or another SN in the activated state within a preset time period, reporting a failure message for the specific SCG to the MN or another SN in the activated state.

In some embodiments, there is a communication interface between the another activated SN and the deactivated SN.

In some embodiments, the beam measurement result of the SCell or PSCell of the specific SCG to which the beam failure occurs includes one or more of the followings:
a beam measurement result greater than a preset threshold;
a maximum beam measurement result; or
measurement results of all beams.

In some embodiments, the indication information of the beam ID of the SCell or PSCell of the specific SCG to which the beam failure occurs includes one or more of the followings:
indication information of a beam whose measurement result is greater than a preset threshold; and
indication information of a beam corresponding to a maximum beam measurement result.

In the embodiments of the disclosure, when the SCG is in the deactivated state, the UE can report the message indicating beam failure to the deactivated SN via the reporting node, and the reporting node is enabled to generate the response message based on the feedback message generated by the deactivated SN, so that the UE can determine, based on the response message, a method for processing beam failure, thereby realizing the BFR when the SCG is in the deactivated state. According to the embodiment of the disclosure, a device for processing beam failure of a deactivated SN is provided, which is a network side device. FIG. 5 is a block diagram of a device for processing beam failure of a deactivated SN provided according to an embodiment of the disclosure. The device includes: a memory 510, a transceiver 520, and a processor 530.

The memory 510 is configured to store computer programs, the transceiver 520 is configured to send and receive data under control of the processor, and the processor 530 is configured to read the computer programs in the memory and perform the following operations:
receiving a message indicating beam failure from a UE;
sending the message indicating beam failure to the deactivated SN, in which the deactivated SN is an SN corresponding to a specific SCG, and the specific SCG is a deactivated SCG and/or an SCG to which a deactivated PSCell belongs;
receiving a feedback message from the deactivated SN; and
generating a response message based on the feedback message and sending the response message to the UE.

The transceiver 520 is configured to send and receive data under the control of the processor 530.

In FIG. 5, the bus architecture may include any number of interconnected buses and bridges, specifically one or more processors represented by the processor 530 and various circuits of the memory represented by the memory 510 are linked together. The bus architecture may also link peripheral devices, voltage regulators, and various other circuits such as power management circuits together, which are well known in the art and will not be further described herein. The bus interface provides an interface. The transceiver 520 may include a plurality of elements, i.e., including a transmitter and a receiver, and provides units for communicating with various other devices over transmission mediums, such as wireless channels, wired channels, fiber optic cables, etc. The processor 530 is responsible for managing the bus architecture and usual processing, and the memory 510 may store data used by the processor 530 in performing operations.

The processor 530 can be a CPU, an ASIC, a FPGA, or a CPLD. The processor can adopt a multi-core architecture.

In some embodiments, receiving the feedback message from the deactivated SN, and the feedback message includes at least one of the followings:
indication information of confirming beam recovery;
indication information of rejecting beam recovery; or
configuration information for beam recovery.

In some embodiments, generating the response message based on the feedback message, includes:
carrying the feedback message in a RRC signaling/MAC CE/MAC PDU and sending the RRC signaling/MAC CE/MAC PDU to the UE.

In some embodiments, generating the response message based on the feedback message, includes:
generating the RRC signaling that carries the feedback message and sending the RRC signaling that carries the feedback message to the UE via a RRC signaling/MAC PDU of the MN; or,
generating the MAC CE/MAC PDU that carries the feedback message and sending the MAC CE/MAC PDU that carries the feedback message to the UE via a MAC CE/MAC PDU of the MN.

In some embodiments, the configuration information for beam recovery includes at least one of the followings:
activated TCI information;
an SSB index;
a CSI-RS index;
beam identification information;
SCG identification information;
cell identification information;
beam recovery indication information; or
the indication information of rejecting beam recovery.

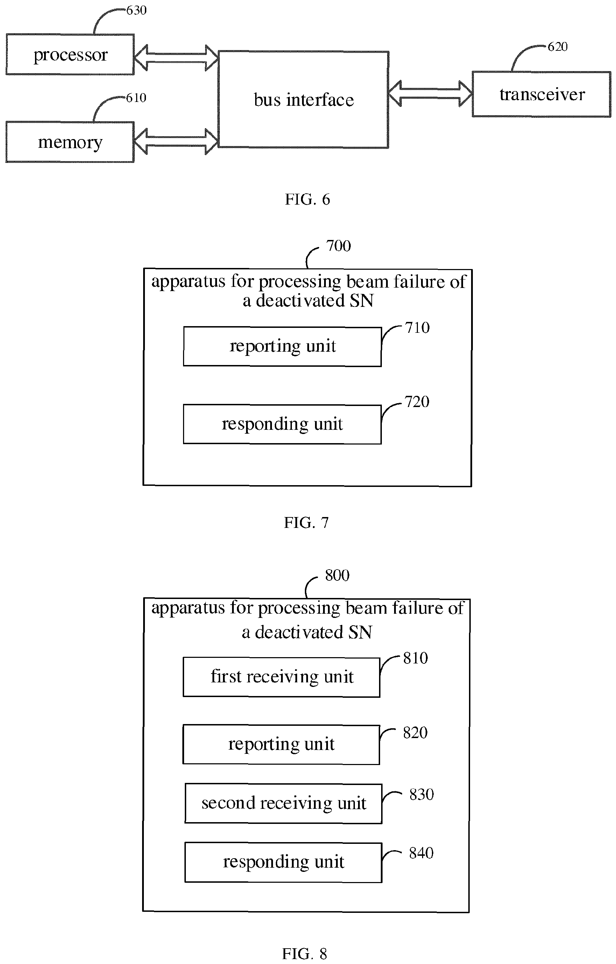

In the embodiments of the disclosure, when the SCG is in the deactivated state, the UE can report the message indicating beam failure to the deactivated SN via the reporting node, and the reporting node is enabled to generate the response message based on the feedback message generated by the deactivated SN, so that the UE can determine, based on the response message, a method for processing beam failure, thereby realizing the BFR when the SCG is in the deactivated state. According to the embodiment of the disclosure, a device for processing beam failure of a deactivated SN is provided, which is a network side device. The network side device includes a deactivated SN. FIG. 6 is a block diagram of a device for processing beam failure of a deactivated SN provided according to an embodiment of the disclosure. The device includes: a memory 610, a transceiver 620, and a processor 630.

The memory 610 is configured to store computer programs, the transceiver 620 is configured to send and receive data under control of the processor, and the processor 630 is configured to read the computer programs in the memory and perform the following operations:
receiving a message indicating beam failure from a reporting node, in which the reporting node is an MN or another activated SN;
generating a feedback message; and
sending the feedback message to the reporting node.

The transceiver 620 is configured to send and receive data under the control of the processor 630.

In FIG. 6, the bus architecture may include any number of interconnected buses and bridges, specifically one or more processors represented by the processor 630 and various circuits of the memory represented by the memory 610 are linked together. The bus architecture may also link peripheral devices, voltage regulators, and various other circuits such as power management circuits together, which are well known in the art and will not be further described herein. The bus interface provides an interface. The transceiver 620 may include a plurality of elements, i.e., including a transmitter and a receiver, and provides units for communicating with various other devices over transmission mediums, such as wireless channels, wired channels, fiber optic cables, etc. The processor 630 is responsible for managing the bus architecture and usual processing, and the memory 610 may store data used by the processor 630 in performing operations.

The processor 630 can be a CPU, an ASIC, a FPGA, or a CPLD. The processor can adopt a multi-core architecture.

In some embodiments, the feedback message includes one or more of the followings:
indication information of confirming beam recovery;
indication information of rejecting beam recovery; or
configuration information for beam recovery.

In some embodiments, the configuration information for beam recovery includes one or more of the followings:
activated TCI information;
an SSB index;
a CSI-RS index;
beam identification information;
SCG identification information;
cell identification information;
beam recovery indication information; or
the indication information of rejecting beam recovery.

In the embodiments of the disclosure, when the SCG is in the deactivated state, the UE can report the message indicating beam failure to the deactivated SN via the reporting node, and the reporting node is enabled to generate the response message based on the feedback message generated by the deactivated SN, so that the UE can determine, based on the response message, a method for processing beam failure, thereby realizing the BFR when the SCG is in the deactivated state. To implement the embodiments of the disclosure, an apparatus for processing beam failure of a deactivated SN is provided in the embodiment of the disclosure. FIG. 7 is a block diagram of an apparatus for processing beam failure of a deactivated SN provided according to an embodiment of the disclosure.

It should be noted that respective functional units in various embodiments of the disclosure may be integrated in one processing unit, or each unit may be physically present separately, or two or more units may be integrated in one unit. The above integrated units can be implemented either in the form of hardware or in the form of software functional units.

Integrated units can be stored in a processor-readable storage medium if they are implemented in the form of software functional units and sold or used as independent products. Based on this understanding, the essence of the technical solutions of the disclosure, parts of the technical solution of the disclosure that contribute to the related art, or all or part of the technical solution of the disclosure can be embodied in the form of software products. The computer software product is stored in a storage medium and includes several instructions to make a computer device (which can be a personal computer, a server, and a network device, etc.) or a processor perform all or part of the steps of the methods of various embodiments of the disclosure. The above storage medium include: an USB flash drive, a mobile hard drive, a Read-Only Memory (ROM), a Random Access Memory (RAM), a disk or a CD-ROM, and other mediums that can store program codes.

As illustrated in FIG. 7, the apparatus for processing beam failure of a deactivated SN includes:
a reporting unit 710, configured to, in response to a configured SCG and/or PSCell being in a deactivated state, detect whether beam failure occurs to a specific SCG, in which the specific SCG is the deactivated SCG and/or an SCG to which the deactivated PSCell belongs; and
a responding unit 720, configured to, in response to detecting that the beam failure occurs to the specific SCG, send a message indicating beam failure of the specific SCG to the specific SCG via a master node (MN) or another SN in an activated state.

In some embodiments, detecting that the beam failure occurs to the specific SCG, includes:
detecting that the beam failure occurs to a PSCell of the specific SCG; and/or,
detecting that the beam failure occurs to a secondary cell (SCell) of the specific SCG.

In some embodiments, the message indicating beam failure includes at least one or more of:
indication information for indicating the beam failure of the specific SCG;
identification information of the specific SCG;
identification information of the SCell of the specific SCG to which the beam failure occurs;
identification information of the PSCell of the specific SCG;
a beam measurement result of the SCell or PSCell of the specific SCG to which the beam failure occurs; or
indication information of a beam identification (ID) of the SCell or PSCell of the specific SCG to which the beam failure occurs.

In some embodiments, sending the message indicating beam failure of the specific SCG to the specific SCG via the MN or another SN in the activated state, includes:
sending the message indicating beam failure of the specific SCG to the MN or another SN in the activated state by carrying the message indicating beam failure of the specific SCG in a radio resource control (RRC) signaling/media access control control element (MAC CE)/MAC protocol data unit (PDU), and sending by the MN or another SN in the activated state the message indicating beam failure of the specific SCG to the specific SCG.

In some embodiments, sending the message indicating beam failure of the specific SCG to the MN by carrying the message indicating beam failure of the specific SCG in the RRC signaling/MAC CE/MAC PDU, includes:
generating the RRC signaling/MAC CE that carries the message indicating beam failure of the specific SCG based on an encoding mode of the MN and sending the RRC signaling/MAC CE to the MN; or,
generating the RRC signaling/MAC CE/MAC PDU that carries the message indicating beam failure of the specific SCG based on an encoding mode of the deactivated SN and sending the RRC signaling/MAC CE/MAC PDU to the MN, wherein the deactivated SN is an SN corresponding to the specific SCG.

In some embodiments, generating the RRC signaling/MAC CE/MAC PDU that carries the message indicating beam failure of the specific SCG based on the encoding mode of the deactivated SN and sending the RRC signaling/MAC CE/MAC PDU to the MN, includes:
generating the RRC signaling that carries the message indicating beam failure of the specific SCG based on the encoding mode of the deactivated SN, and sending the RRC signaling that carries the message indicating beam failure of the specific SCG to the MN via a RRC signaling/MAC PDU of the MN; or,
generating the MAC CE/MAC PDU that carries the message indicating beam failure of the specific SCG based on the encoding mode of the deactivated SN, and sending the MAC CE/MAC PDU that carries the message indicating beam failure of the specific SCG to the MN via a MAC CE/MAC PDU of the MN.

In some embodiments, sending the message indicating beam failure of the specific SCG to the another SN in the activated state by carrying the message indicating beam failure of the specific SCG in the RRC signaling/MAC CE/MAC PDU, includes:
generating the RRC signaling/MAC CE that carries the message indicating beam failure of the specific SCG based on an encoding mode of the MN and sending the RRC signaling/MAC CE to the another SN in the activated state; or,
generating the RRC signaling/MAC CE/MAC PDU that carries the message indicating beam failure of the specific SCG based on an encoding mode of the deactivated SN and sending the RRC signaling/MAC CE/MAC PDU to the another SN in the activated state, in which the deactivated SN is an SN corresponding to the specific SCG.

In some embodiments, generating the RRC signaling/MAC CE/MAC PDU that carries the message indicating beam failure of the specific SCG based on the encoding mode of the deactivated SN and sending the RRC signaling/MAC CE/MAC PDU to the another SN in the activated state, includes:
generating the RRC signaling that carries the message indicating beam failure of the specific SCG based on the encoding mode of the deactivated SN, and sending the RRC signaling that carries the message indicating beam failure of the specific SCG to the another SN in the activated state via a RRC signaling/MAC PDU of the MN; or,
generating the MAC CE/MAC PDU that carries the message indicating beam failure of the specific SCG based on the encoding mode of the deactivated SN, and sending the MAC CE/MAC PDU that carries the message indicating beam failure of the specific SCG to the another SN in the activated state via a MAC CE/MAC PDU of the MN.

In some embodiments, the RRC signaling/MAC CE/MAC PDU that carries the message indicating beam failure of the specific SCG further includes identification information of the deactivated SN and/or an encoded signaling length of the deactivated SN.

In some embodiments, the method further includes:
receiving a response message fed back by the MN or another SN in the activated state, in which the response message includes at least one of the followings:
beam recovery indication information;
indication information of rejecting beam recovery;
indication information for reconfiguring the deactivated SN;
a feedback message of the deactivated SN; or
configuration information for beam recovery.

In some embodiments, receiving the response message fed back by the MN or another SN in the activated state, includes at least one of the followings:
receiving the response message via a RRC signaling; or
receiving the response message via a MAC PDU/MAC CE.

In some embodiments, the RRC signaling/MAC CE/MAC PDU includes the feedback message of the deactivated SN or a RRC signaling/MAC CE/MAC PDU generated by the deactivated SN.

In some embodiments, the configuration information for beam recovery includes one or more of:
activated TCI information;
an SSB index;
a CSI-RS index;
beam identification information;
SCG identification information;
cell identification information;
the beam recovery indication information; or
the indication information of rejecting beam recovery.

In some embodiments, the method further includes:
recovering a corresponding beam based on the configuration information for beam recovery in the response message; or
recovering a beam with the best channel quality reported for the SCell or PSCell to which the beam failure occurs based on the response message; or
reporting a failure message for the specific SCG to the MN or another SN in the activated state, based on the indication information of rejecting beam recovery or the indication information for reconfiguring the deactivated SN in the response message.

In some embodiments, the method further includes:
in response to not receiving a response message fed back by the MN or another SN in the activated state within a preset time period, reporting a failure message for the specific SCG to the MN or another SN in the activated state.

In some embodiments, there is a communication interface between the another activated SN and the deactivated SN.

In some embodiments, the beam measurement result of the SCell or PSCell of the specific SCG to which the beam failure occurs includes one or more of the followings:
a beam measurement result greater than a preset threshold;
a maximum beam measurement result; or
measurement results of all beams.

In some embodiments, the indication information of the beam ID of the SCell or PSCell of the specific SCG to which the beam failure occurs includes one or more of the followings:
indication information of a beam whose measurement result is greater than a preset threshold; and
indication information of a beam corresponding to a maximum beam measurement result.

In the embodiments of the disclosure, when the SCG is in the deactivated state, the UE can report the message indicating beam failure to the deactivated SN via the reporting node, and the reporting node is enabled to generate the response message based on the feedback message generated by the deactivated SN, so that the UE can determine, based on the response message, a method for processing beam failure, thereby realizing the BFR when the SCG is in the deactivated state. To implement the embodiments of the disclosure, an apparatus for processing beam failure of a deactivated SN is provided in the embodiment of the disclosure. FIG. 8 is a block diagram of an apparatus for processing beam failure of a deactivated SN provided according to an embodiment of the disclosure.

As illustrated in FIG. 8, the apparatus for processing beam failure of a deactivated SN includes:
a first receiving unit 810, configured to receive a message indicating beam failure from a UE;
a reporting unit 820, configured to send the message indicating beam failure to the deactivated SN, in which the deactivated SN is an SN corresponding to a specific SCG, and the specific SCG is a deactivated SCG and/or an SCG to which a deactivated PSCell belongs;
a second receiving unit 830, configured to receive a feedback message from the deactivated SN; and
a responding unit 840, configured to generate a response message based on the feedback message and send the response message to the UE.

In some embodiments, receiving the feedback message from the deactivated SN, and the feedback message includes at least one of the followings:
indication information of confirming beam recovery;
indication information of rejecting beam recovery; or
configuration information for beam recovery.

In some embodiments, generating the response message based on the feedback message, includes:
carrying the feedback message in a RRC signaling/MAC CE/MAC PDU and sending the RRC signaling/MAC CE/MAC PDU to the UE.

In some embodiments, generating the response message based on the feedback message, includes:
generating the RRC signaling that carries the feedback message and sending the RRC signaling that carries the feedback message to the UE via a RRC signaling/MAC PDU of the MN; or,
generating the MAC CE/MAC PDU that carries the feedback message and sending the MAC CE/MAC PDU that carries the feedback message to the UE via a MAC CE/MAC PDU of the MN.

In some embodiments, the configuration information for beam recovery includes at least one of the followings:
activated TCI information;
an SSB index;
a CSI-RS index;
beam identification information;
SCG identification information;
cell identification information;
beam recovery indication information; or
the indication information of rejecting beam recovery.

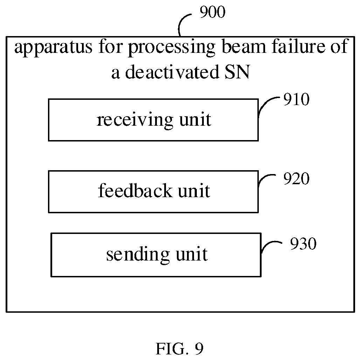

In the embodiments of the disclosure, when the SCG is in the deactivated state, the UE can report the message indicating beam failure to the deactivated SN via the reporting node, and the reporting node is enabled to generate the response message based on the feedback message generated by the deactivated SN, so that the UE can determine, based on the response message, a method for processing beam failure, thereby realizing the BFR when the SCG is in the deactivated state. To implement the embodiments of the disclosure, an apparatus for processing beam failure of a deactivated SN is provided in the embodiment of the disclosure. FIG. 9 is a block diagram of an apparatus for processing beam failure of a deactivated SN provided according to an embodiment of the disclosure.

As illustrated in FIG. 9, the apparatus for processing beam failure of a deactivated SN includes:
a receiving unit 910, configured to receive a message indicating beam failure from a reporting node, in which the reporting node is an MN or another activated SN;
a feedback unit 920, configured to generate a feedback message; and
a sending unit 930, configured to send the feedback message to the reporting node.

In some embodiments, the feedback message includes one or more of the followings:
indication information of confirming beam recovery;
indication information of rejecting beam recovery; or
configuration information for beam recovery.

In some embodiments, the configuration information for beam recovery includes one or more of the followings:
activated TCI information;
an SSB index;
a CSI-RS index;
beam identification information;
SCG identification information;
cell identification information;
beam recovery indication information; or
the indication information of rejecting beam recovery.

In the embodiments of the disclosure, when the SCG is in the deactivated state, the UE can report the message indicating beam failure to the deactivated SN via the reporting node, and the reporting node is enabled to generate the response message based on the feedback message generated by the deactivated SN, so that the UE can determine, based on the response message, a method for processing beam failure, thereby realizing the BFR when the SCG is in the deactivated state.

In order to implement the embodiments of the disclosure, the disclosure also provides a processor-readable storage medium having computer programs stored thereon. The computer programs are configured to cause a processor to implement the method described in FIG. 1 of the disclosure.

The processor-readable storage medium may be any available medium or data storage device that the processor can access, including but not limited to magnetic memory (e.g., floppy disk, hard disk, magnetic tape, magnetic optical disk (MO), etc.), optical memory (e.g., CD, DVD, BD, HVD, etc.), and semiconductor memory (e.g., ROM, EPROM, EEPROM, non-volatile memory (NAND FLASH), solid state drive (SSD)), etc.

In order to implement the embodiments of the disclosure, the disclosure also provides a processor-readable storage medium having computer programs stored thereon. The computer programs are configured to cause a processor to implement the method described in FIG. 2 of the disclosure.

The processor-readable storage medium may be any available medium or data storage device that the processor can access, including but not limited to magnetic memory (e.g., floppy disk, hard disk, magnetic tape, magnetic optical disk (MO), etc.), optical memory (e.g., CD, DVD, BD, HVD, etc.), and semiconductor memory (e.g., ROM, EPROM, EEPROM, non-volatile memory (NAND FLASH), solid state drive (SSD)), etc.

In order to implement the embodiments of the disclosure, the disclosure also provides a processor-readable storage medium having computer programs stored thereon. The computer programs are configured to cause a processor to implement the method described in FIG. 3 of the disclosure.

The processor-readable storage medium may be any available medium or data storage device that the processor can access, including but not limited to magnetic memory (e.g., floppy disk, hard disk, magnetic tape, magnetic optical disk (MO), etc.), optical memory (e.g., CD, DVD, BD, HVD, etc.), and semiconductor memory (e.g., ROM, EPROM, EEPROM, non-volatile memory (NAND FLASH), solid state drive (SSD)), etc.

In order to implement the embodiments of the disclosure, the disclosure also provides a computer program product including computer program codes. When the computer program codes are executed on a computer, the computer is caused to implement the method described in FIG. 1 of the disclosure.

In order to implement the embodiments of the disclosure, the disclosure also provides a computer program product including computer program codes. When the computer program codes are executed on a computer, the computer is caused to implement the method described in FIG. 2 of the disclosure.

In order to implement the embodiments of the disclosure, the disclosure also provides a computer program product including computer program codes. When the computer program codes are executed on a computer, the computer is caused to implement the method described in FIG. 3 of the disclosure.

In order to implement the embodiments of the disclosure, the disclosure also provides a computer program including computer program codes. When the computer program codes are executed on a computer, the computer is caused to implement the method described in FIG. 1 of the disclosure.

In order to implement the embodiments of the disclosure, the disclosure also provides a computer program including computer program codes. When the computer program codes are executed on a computer, the computer is caused to implement the method described in FIG. 2 of the disclosure.

In order to implement the embodiments of the disclosure, the disclosure also provides a computer program including computer program codes. When the computer program codes are executed on a computer, the computer is caused to implement the method described in FIG. 3 of the disclosure.

Those skilled in the art understand that the embodiments of the disclosure may be provided as methods, systems, or computer program products. Therefore, the disclosure may provide the embodiments in the form of entire hardware, the embodiments in the form of entire software, or the embodiments in the form of software and hardware. Moreover, the disclosure may take the form of a computer program product implemented on one or more computer-usable storage mediums (including, but not limited to, a disk memory and an optical memory) that contain computer-usable program codes therein.

The disclosure is described with reference to the flowcharts and/or the block diagrams of the methods, the devices (systems), and the computer program products according to the embodiments of the disclosure. It is understood that each process and/or box in the flowchart and/or block diagram, and the combination of processes and/or boxes in the flowchart and/or the block diagram, may be implemented by the computer-executable instructions. These computer-executable instructions may be provided to a processor of a general computer, a specialized computer, an embedded processor, or other programmable data processing devices to produce a machine, such that the instructions executed by the processor of the computer or other programmable data processing devices can produce a device for implementing the functions specified in one or more processes of the flowchart and/or one or more boxes of the block diagram.

These processor-executable instructions may also be stored in a processor-readable memory capable of directing a computer or other programmable data processing device to operate in a particular manner, such that the instructions stored in the processor-readable memory produce an article of manufacture including an instruction device. The instruction device implements the functions specified in one or more processes of the flowchart and/or one or more boxes of the block diagram.

These processor-executable instructions may also be loaded onto a computer or other programmable data processing devices, such that a series of operational steps are performed on the computer or other programmable devices to produce computer-implemented processes. The instructions executed on the computer or other programmable devices provide steps for implementing the functions specified in one or more processes of the flowchart and/or one or more boxes of the block diagram.

All the embodiments of the disclosure may be implemented alone or in combination with other embodiments, and are considered to be within the scope of protection claimed herein.

## Claims

1. A method for processing beam failure of a deactivated secondary node (SN), applied to a user equipment (UE), comprising:
in response to a configured secondary cell group (SCG) and/or a primary SCG cell (PSCell) being in a deactivated state, detecting whether beam failure occurs to a specific SCG, wherein the specific SCG is the deactivated SCG and/or an SCG to which the deactivated PSCell belongs; and
in response to detecting that the beam failure occurs to the specific SCG, sending a message indicating beam failure of the specific SCG to the specific SCG via a master node (MN) or another SN in an activated state.

2. The method of claim 1, wherein detecting that the beam failure occurs to the specific SCG, comprises:
detecting that the beam failure occurs to the PSCell of the specific SCG; and/or,
detecting that the beam failure occurs to a secondary cell (SCell) of the specific SCG.

3. The method of claim 1 or 2, wherein the message indicating beam failure comprises at least one or more of:
indication information for indicating the beam failure of the specific SCG;
identification information of the specific SCG;
identification information of the SCell of the specific SCG to which the beam failure occurs;
identification information of the PSCell of the specific SCG;
a beam measurement result of the SCell or PSCell of the specific SCG to which the beam failure occurs; or
indication information of a beam identification (ID) of the SCell or PSCell of the specific SCG to which the beam failure occurs.

4. The method of any one of claims 1-3, wherein sending the message indicating beam failure of the specific SCG to the specific SCG via the MN or the another SN in the activated state, comprises:
sending the message indicating beam failure of the specific SCG to the MN or the another SN in the activated state by carrying the message indicating beam failure of the specific SCG in a radio resource control (RRC) signaling/media access control control element (MAC CE)/MAC protocol data unit (PDU), and sending by the MN or the another SN in the activated state the message indicating beam failure of the specific SCG to the specific SCG.

5. The method of claim 4, wherein sending the message indicating beam failure of the specific SCG to the MN by carrying the message indicating beam failure of the specific SCG in the RRC signaling/MAC CE/MAC PDU, comprises:
generating the RRC signaling/MAC CE that carries the message indicating beam failure of the specific SCG based on an encoding mode of the MN and sending the RRC signaling/MAC CE to the MN; or,
generating the RRC signaling/MAC CE/MAC PDU that carries the message indicating beam failure of the specific SCG based on an encoding mode of the deactivated SN and sending the RRC signaling/MAC CE/MAC PDU to the MN, wherein the deactivated SN is an SN corresponding to the specific SCG.

6. The method of claim 5, wherein generating the RRC signaling/MAC CE/MAC PDU that carries the message indicating beam failure of the specific SCG based on the encoding mode of the deactivated SN and sending the RRC signaling/MAC CE/MAC PDU to the MN, comprises:
generating the RRC signaling that carries the message indicating beam failure of the specific SCG based on the encoding mode of the deactivated SN, and sending the RRC signaling that carries the message indicating beam failure of the specific SCG to the MN via a RRC signaling/MAC PDU of the MN; or,
generating the MAC CE/MAC PDU that carries the message indicating beam failure of the specific SCG based on the encoding mode of the deactivated SN, and sending the MAC CE/MAC PDU that carries the message indicating beam failure of the specific SCG to the MN via a MAC CE/MAC PDU of the MN.

7. The method of claim 6, wherein the RRC signaling/MAC CE/MAC PDU that carries the message indicating beam failure of the specific SCG further comprises identification information of the deactivated SN and/or an encoded signaling length of the deactivated SN.

8. The method of any one of claims 1-7, further comprising:
receiving a response message fed back by the MN or the another SN in the activated state, wherein the response message comprises at least one of the followings:
beam recovery indication information;
indication information of rejecting beam recovery;
indication information for reconfiguring the deactivated SN;
a feedback message from the deactivated SN; or
configuration information for beam recovery.

9. The method of claim 8, wherein receiving the response message fed back by the MN or the another SN in the activated state, comprises at least one of the followings:
receiving the response message via a RRC signaling; or
receiving the response message via a MAC PDU/MAC CE.

10. The method of claim 8 or 9, wherein the RRC signaling/MAC PDU/MAC CE comprises the feedback message of the deactivated SN or a RRC signaling/MAC PDU/MAC CE generated by the deactivated SN.

11. The method of claim 8, wherein the configuration information for beam recovery comprises one or more of:
activated transmission configuration indication (TCI) information;
a synchronization signal block (SSB) index;
a channel state indication reference signal (CSI-RS) index;
beam identification information;
SCG identification information;
cell identification information;
the beam recovery indication information; or
the indication information of rejecting beam recovery.

12. The method of claim 1 or 6, further comprising:
recovering a corresponding beam based on the configuration information for beam recovery in the response message; or
recovering a beam with the best channel quality reported for the SCell or PSCell to which the beam failure occurs, based on the response message; or
reporting a failure message for the specific SCG to the MN or the another SN in the activated state, based on the indication information of rejecting beam recovery or the indication information for reconfiguring the deactivated SN in the response message.

13. The method of any one of claims 1-12, further comprising:
in response to not receiving a response message fed back from the MN or the another SN in the activated state within a preset time period, reporting a failure message for the specific SCG to the MN or the another SN in the activated state.

14. The method of any one of claims 1-13, wherein there is a communication interface between the another activated SN and the deactivated SN.

15. The method of claim 3, wherein the beam measurement result of the SCell or PSCell of the specific SCG to which the beam failure occurs comprises one or more of the followings:
a beam measurement result greater than a preset threshold;
a maximum beam measurement result; or
measurement results of all beams.

16. The method of claim 3, wherein the indication information of the beam ID of the SCell or PSCell of the specific SCG to which the beam failure occurs comprises one or more of the followings:
indication information of a beam whose measurement result is greater than a preset threshold; or
indication information of a beam corresponding to a maximum beam measurement result.

17. A method for processing beam failure of a deactivated secondary node (SN), applied to a master node (MN) or an activated SN, comprising:
receiving a message indicating beam failure from a user equipment (UE);
sending the message indicating beam failure to a deactivated SN, wherein the deactivated SN is an SN corresponding to a specific secondary cell group (SCG), and the specific SCG is a deactivated SCG and/or an SCG to which a deactivated primary SCG cell (PSCell) belongs;
receiving a feedback message from the deactivated SN; and
generating a response message based on the feedback message and sending the response message to the UE.

18. The method of claim 17, wherein receiving the feedback message from the deactivated SN, and the feedback message comprises at least one of the followings:
indication information of confirming beam recovery;
indication information of rejecting beam recovery; or
configuration information for beam recovery.

19. The method of claim 17, wherein generating the response message based on the feedback message, comprises:
carrying the feedback message in a RRC signaling/MAC CE/MAC PDU and sending the RRC signaling/MAC CE/MAC PDU to the UE.

20. The method of claim 19, wherein generating the response message based on the feedback message, comprises:
generating the RRC signaling that carries the feedback message and sending the RRC signaling that carries the feedback message to the UE via a RRC signaling/MAC PDU of the MN; or,
generating the MAC CE/MAC PDU that carries the feedback message and sending the MAC CE/MAC PDU that carries the feedback message to the UE via a MAC CE/MAC PDU of the MN.

21. The method of claim 18, wherein the configuration information for beam recovery comprises at least one of the followings:
activated transmission configuration indication (TCI) information;
a synchronization signal block (SSB) index;
a channel state indication reference signal (CSI-RS) index;
beam identification information;
SCG identification information;
cell identification information;
beam recovery indication information; or
the indication information of rejecting beam recovery.

22. A method for processing beam failure of a deactivated secondary node (SN), applied to a deactivated network side device, comprising:
receiving a message indicating beam failure from a reporting node, wherein the reporting node is a master node (MN) or another activated SN;
generating a feedback message; and
sending the feedback message to the reporting node.

23. The method of claim 22, wherein the feedback message comprises one or more of the followings:
indication information of confirming beam recovery;
indication information of rejecting beam recovery; or
configuration information for beam recovery.

24. The method of claim 23, wherein the configuration information for beam recovery comprises one or more of the followings:
activated transmission configuration indication (TCI) information;
a synchronization signal block (SSB) index;
a channel state indication reference signal (CSI-RS) index;
beam identification information;
SCG identification information;
cell identification information;
beam recovery indication information; or
the indication information of rejecting beam recovery.

25. A device for processing beam failure of a deactivated secondary node (SN), comprising: a memory, a transceiver and a processor, wherein
the memory is configured to store computer programs, the transceiver is configured to send and receive data under control of the processor, and the processor is configured to read the computer programs in the memory and perform the following operations:
in response to a configured secondary cell group (SCG) and/or primary SCG cell (PSCell) being in a deactivated state, detecting whether beam failure occurs to a specific SCG, wherein the specific SCG is the deactivated SCG and/or an SCG to which the deactivated PSCell belongs; and
in response to detecting that the beam failure occurs to the specific SCG, sending a message indicating beam failure of the specific SCG to the specific SCG via a master node (MN) or another SN in an activated state.

26. The device of claim 25, wherein detecting that the beam failure occurs to the specific SCG, comprises:
detecting that the beam failure occurs to a PSCell of the specific SCG; and/or,
detecting that the beam failure occurs to a secondary cell (SCell) of the specific SCG.

27. The device of claim 25 or 26, wherein the message indicating beam failure comprises at least one or more of:
indication information for indicating the beam failure of the specific SCG;
identification information of the specific SCG;
identification information of the SCell of the specific SCG to which the beam failure occurs;
identification information of the PSCell of the specific SCG;
a beam measurement result of the SCell or PSCell of the specific SCG to which the beam failure occurs; or
indication information of a beam identification (ID) of the SCell or PSCell of the specific SCG to which the beam failure occurs.

28. The device of any one of claims 25-27, wherein sending the message indicating beam failure of the specific SCG to the specific SCG via the MN or another SN in the activated state, comprises:
sending the message indicating beam failure of the specific SCG to the MN or another SN in the activated state by carrying the message indicating beam failure of the specific SCG in a radio resource control (RRC) signaling/media access control control element (MAC CE)/MAC protocol data unit (PDU), and sending by the MN or another SN in the activated state the message indicating beam failure of the specific SCG to the specific SCG.

29. The device of claim 28, wherein sending the message indicating beam failure of the specific SCG to the MN by carrying the message indicating beam failure of the specific SCG in the RRC signaling/MAC CE/MAC PDU, comprises:
generating the RRC signaling/MAC CE that carries the message indicating beam failure of the specific SCG based on an encoding mode of the MN and sending the RRC signaling/MAC CE to the MN; or,
generating the RRC signaling/MAC CE/MAC PDU that carries the message indicating beam failure of the specific SCG based on an encoding mode of the deactivated SN and sending the RRC signaling/MAC CE/MAC PDU to the MN, wherein the deactivated SN is an SN corresponding to the specific SCG.

30. The device of claim 29, wherein generating the RRC signaling/MAC CE/MAC PDU that carries the message indicating beam failure of the specific SCG based on the encoding mode of the deactivated SN and sending the RRC signaling/MAC CE/MAC PDU to the MN, comprises:
generating the RRC signaling that carries the message indicating beam failure of the specific SCG based on the encoding mode of the deactivated SN, and sending the RRC signaling that carries the message indicating beam failure of the specific SCG to the MN via a RRC signaling/MAC PDU of the MN; or,
generating the MAC CE/MAC PDU that carries the message indicating beam failure of the specific SCG based on the encoding mode of the deactivated SN, and sending the MAC CE/MAC PDU that carries the message indicating beam failure of the specific SCG to the MN via a MAC CE/MAC PDU of the MN.

31. The device of claim 30, wherein the RRC signaling/MAC CE/MAC PDU that carries the message indicating beam failure of the specific SCG further comprises identification information of the deactivated SN and/or an encoded signaling length of the deactivated SN.

32. The device of any one of claims 25-31, further comprising:
receiving a response message fed back by the MN or another SN in the activated state, wherein the response message comprises at least one of the followings:
beam recovery indication information;
indication information of rejecting beam recovery;
indication information for reconfiguring the deactivated SN;
a feedback message of the deactivated SN; or
configuration information for beam recovery.

33. The device of claim 32, wherein receiving the response message fed back by the MN or another SN in the activated state, comprises at least one of the followings:
receiving the response message via a RRC signaling; or
receiving the response message via a MAC PDU/MAC CE.

34. The device of claim 32 or 33, wherein the RRC signaling/MAC PDU/MAC CE comprises the feedback message of the deactivated SN or a RRC signaling/MAC PDU/MAC CE generated by the deactivated SN.

35. The device of claim 32, wherein the configuration information for beam recovery comprises one or more of:
activated transmission configuration indication (TCI) information;
a synchronization signal block (SSB) index;
a channel state indication reference signal (CSI-RS) index;
beam identification information;
SCG identification information;
cell identification information;
the beam recovery indication information; or
the indication information of rejecting beam recovery .

36. The device of claim 25 or 30, further comprising:
recovering a corresponding beam based on the configuration information for beam recovery in the response message; or
recovering a beam with the best channel quality reported for the SCell or PSCell to which the beam failure occurs based on the response message; or
reporting a failure message for the specific SCG to the MN or another SN in the activated state, based on the indication information of rejecting beam recovery or the indication information for reconfiguring the deactivated SN in the response message.

37. The device of any one of claims 25-36, further comprising:
in response to not receiving a response message fed back by the MN or another SN in the activated state within a preset time period, reporting a failure message for the specific SCG to the MN or another SN in the activated state.

38. The device of any one of claims 25-37, wherein there is a communication interface between the another activated SN and the deactivated SN.

39. The device of claim 27, wherein the beam measurement result of the SCell or PSCell of the specific SCG to which the beam failure occurs comprises one or more of the followings:
a beam measurement result greater than a preset threshold;
a maximum beam measurement result; or
measurement results of all beams.

40. The device of claim 27, wherein the indication information of the beam ID of the SCell or PSCell of the specific SCG to which the beam failure occurs comprises one or more of the followings:
indication information of a beam whose measurement result is greater than a preset threshold; and
indication information of a beam corresponding to a maximum beam measurement result.

41. A device for processing beam failure of an deactivated secondary node (SN), comprising: a memory, a transceiver and a processor, wherein
the memory is configured to store computer programs, the transceiver is configured to send and receive data under control of the processor, and the processor is configured to read the computer programs in the memory and perform the following operations:
receiving a message indicating beam failure from a UE;
sending the message indicating beam failure to the deactivated SN, wherein the deactivated SN is an SN corresponding to a specific secondary cell group (SCG), and the specific SCG is a deactivated SCG and/or an SCG to which a deactivated primary SCG cell (PSCell) belongs;
receiving a feedback message from the deactivated SN; and
generating a response message based on the feedback message and sending the response message to the UE.

42. The device of claim 41, wherein receiving the feedback message from the deactivated SN, and the feedback message comprises at least one of the followings:
indication information of confirming beam recovery;
indication information of rejecting beam recovery; or
configuration information for beam recovery.

43. The device of claim 41, wherein generating the response message based on the feedback message, comprises:
carrying the feedback message in a RRC signaling/MAC CE/MAC PDU and sending the RRC signaling/MAC CE/MAC PDU to the UE.

44. The device of claim 43, wherein generating the response message based on the feedback message, comprises:
generating the RRC signaling that carries the feedback message and sending the RRC signaling that carries the feedback message to the UE via a RRC signaling/MAC PDU of the MN; or,
generating the MAC CE/MAC PDU that carries the feedback message and sending the MAC CE/MAC PDU that carries the feedback message to the UE via a MAC CE/MAC PDU of the MN.

45. The device of claim 42, wherein the configuration information for beam recovery comprises at least one of the followings:
activated transmission configuration indication (TCI)information;
a synchronization signal block (SSB) index;
a channel state indication reference signal (CSI-RS) index;
beam identification information;
SCG identification information;
cell identification information;
beam recovery indication information; or
the indication information of rejecting beam recovery.

46. A device for processing beam failure of a deactivated secondary node (SN), comprising: a memory, a transceiver and a processor, wherein
the memory is configured to store computer programs, the transceiver is configured to send and receive data under control of the processor, and the processor is configured to read the computer programs in the memory and perform the following operations:
receiving a message indicating beam failure from a reporting node, wherein the reporting node is a master node (MN) or another activated SN;
generating a feedback message; and
sending the feedback message to the reporting node.

47. The device of claim 46, wherein the feedback message comprises one or more of the followings:
indication information of confirming beam recovery;
indication information of rejecting beam recovery; or
configuration information for beam recovery.

48. The device of claim 47, wherein the configuration information for beam recovery comprises one or more of the followings:
activated transmission configuration indication (TCI)information;
a synchronization signal block (SSB) index;
a channel state indication reference signal (CSI-RS) index;
beam identification information;
SCG identification information;
cell identification information;
beam recovery indication information; or
the indication information of rejecting beam recovery.

49. An apparatus for processing beam failure of a deactivated secondary node (SN), comprising:
a reporting unit, configured to, in response to a configured secondary cell group (SCG) and/or primary SCG cell (PSCell) being in a deactivated state, detect whether beam failure occurs to a specific SCG, wherein the specific SCG is the deactivated SCG and/or an SCG to which the deactivated PSCell belongs; and
a responding unit, configured to, in response to detecting that the beam failure occurs to the specific SCG, send a message indicating beam failure of the specific SCG to the specific SCG via a master node (MN) or another SN in an activated state.

50. An apparatus for processing beam failure of a deactivated secondary node (SN), comprising:
a first receiving unit, configured to receive a message indicating beam failure from a UE;
a reporting unit, configured to send the message indicating beam failure to the deactivated SN, wherein the deactivated SN is an SN corresponding to a specific secondary cell group (SCG), and the specific SCG is a deactivated SCG and/or an SCG to which a deactivated primary SCG cell (PSCell) belongs;
a second receiving unit, configured to receive a feedback message from the deactivated SN; and
a responding unit, configured to generate a response message based on the feedback message and send the response message to the UE.

51. An apparatus for processing beam failure of a deactivated secondary node (SN), comprising:
a receiving unit, configured to receive a message indicating beam failure from a reporting node, wherein the reporting node is a master node (MN) or another activated SN;
a feedback unit, configured to generate a feedback message; and
a sending unit, configured to send the feedback message to the reporting node.

52. A processor-readable storage medium having computer programs stored thereon, wherein the computer programs are configured to cause a processor to implement the method of any one of claims 1 to 16, or the method of any one of claims 17 to 21, or the method of any one of claims 22 to 24.

53. A computer program product comprising computer program codes, wherein when the computer program codes are executed on a computer, the computer is caused to implement the method of any one of claims 1 to 16, or the method of any one of claims 17 to 21, or the method of any one of claims 22 to 24.

54. A computer program comprising computer program codes, wherein when the computer program codes are executed on a computer, the computer is caused to implement the method of any one of claims 1 to 16, or the method of any one of claims 17 to 21, or the method of any one of claims 22 to 24.
